# EUROPÄISCHE PATENTSCHRIFT

(11) **EP 2 865 484 B1**
(45) Veröffentlichungstag und Bekanntmachung des Hinweises auf die Patenterteilung: **05.12.2018**
(21) Anmeldenummer: 14189875.9
(22) Anmeldetag: 22.10.2014
(51) Int. Cl.: B27B 5/06

(54) **Verfahren und Vorrichtung zum Bearbeiten von Werkstücken**
Method and device for machining workpieces
Procédé et dispositif d'usinage de pièces

(30) Priorität: 25.10.2013 DE 102013221725
(43) Veröffentlichungstag der Anmeldung: 29.04.2015
(73) Patentinhaber: Weeke Bohrsysteme GmbH, 33442 Herzebrock-Clarholz (DE)
(72) Erfinder: Heimann, Reinhard, 33332 Gütersloh (DE)
(74) Vertreter: Hoffmann Eitle

(56) Entgegenhaltungen:
- EP-A1- 2 098 343
- EP-A2- 1 136 185
- WO-A1-92/12816
- DE-A1- 19 846 819
- DE-A1-102011 054 361
- US-A1- 2010 181 165

## Beschreibung

### Technisches Gebiet

Die vorliegende Erfindung bezieht sich auf ein Verfahren und eine Vorrichtung zum Aufteilen eines insbesondere plattenförmigen Werkstücks, wobei das Werkstück bevorzugt zumindest abschnittsweise aus Holz, Holzwerkstoffen, Kunststoff, Gips, Zementfaser oder dergleichen besteht.

### Stand der Technik

Beim Aufteilen eines Werkstücks, auch bekannt als "Nesting", wird im Allgemeinen ein Ausgangswerkstück, z.B. eine Werkstückplatte, verschnittoptimiert in mehrere Teilwerkstücke unterteilt, wobei diese Teilwerkstücke beispielsweise mittels eines Fräswerkzeugs aus dem Ausgangswerkstück herausgetrennt werden.
Der Anmelderin sind dabei nur Verfahren und Vorrichtungen bekannt, bei denen das Ausgangswerkstück auf einem Bearbeitungstisch mit einer sogenannten Schonplatte, Schonmatte oder dergleichen über Vakuum fixiert wird und sich anschließend ein Bearbeitungswerkzeug über das Ausgangswerkstück bewegt, um die Teilwerkstücke aus diesem herauszufräsen oder auf sonstige Weise herauszutrennen. Das Werkstück liegt dabei auf der Schonplatte, Schonmatte oder dergleichen auf, wobei diese aus einem relativ weichen Material mit einer hohen Porosität besteht. Diese hohe Porosität ermöglicht ein Fixieren der Werkstücke mit Vakuum. Die Schonplatte, Schonmatte oder dergleichen fungiert dabei nicht nur als Werkstückauflagefläche, sondern vor allem als "Pufferzone" für das Bearbeitungswerkzeug. So kann das Bearbeitungswerkzeug während dem Heraustrennen der Teilwerkstücke in die weiche Schonplatte, Schonmatte oder dergleichen eindringen, wodurch eine Beschädigung des Werkzeugs vermieden werden kann.
Die aus dem Stand der Technik bekannten Verfahren und Vorrichtungen besitzen jedoch den Nachteil, dass diese kostenintensive Systeme mit geringen Maschinenstandzeiten sowie hohen Energiekosten und damit hohen Werkstückkosten aufweisen.

EP 2 098 343 A1 offenbart ein Verfahren nach dem Oberbegriff des Anspruchs 1 und eine Vorrichtung nach dem Oberbegriff des Anspruchs 6. Ferner ist die WO 92/12816 A1 bekannt, die eine Vorrichtung zum Verarbeiten von Werkstücken betrifft, welche Klemmeinrichtungen umfasst, die zum sukzessiven, alternierenden Zuführen eines Werkstücks vorgesehen sind.
Die DE 10 2011 054 361 A1 zeigt ein Verfahren zur Herstellung von Werkstücken aus einem plattenförmigen Material durch einen Trennvorgang mit einer Trennvorrichtung einer Werkzeugmaschine, mit einem Bearbeitungskopf sowie einer Werkstückauflage, die einen ersten und zweiten Auflagetisch mit jeweils einer Auflagefläche umfasst.
Ferner ist eine Plattenbearbeitungsmaschine aus der DE 198 46 819 A1 bekannt.

### Darstellung der Erfindung

Es ist daher Aufgabe der vorliegenden Erfindung, ein Verfahren und eine Vorrichtung zum Aufteilen eines insbesondere plattenförmigen Werkstücks bereitzustellen, mit dem/der die Systemkosten verringert und die Maschinenstandzeit erhöht wird.

Der Erfindung liegt der Gedanke zugrunde, dass die hohen Systemkosten, die geringen Maschinenstandzeiten sowie die hohen Energiekosten der Verfahren und Vorrichtungen aus dem

S.d.T. vor allem darin begründet liegen, dass diese eine Schonplatte, Schonmatte oder dergleichen aufweisen. So entstehen mit der Zeit in der Schonplatte, Schonmatte oder dergleichen durch die Bearbeitungswerkzeuge Vertiefungen, die ein häufiges Austauschen der Schonplatte, Schonmatte oder dergleichen erfordern.

Dies liegt zum einen darin begründet, dass die Vertiefungen zu einer Unterbrechung der Auflagefläche führen und somit die Aufnahmefähigkeit der Schonplatte, Schonmatte oder dergleichen für Werkstücke verschlechtern, zum anderen erfordert ein steigender Vertiefungsanteil eine höhere Vakuumleistung zum sicheren Fixieren von Werkstücken, da sich durch die Vertiefungen die Leckageströmungen erhöhen. Jedes Austauschen der Schonplatte, Schonmatte oder dergleichen erhöht dabei die Stillstandzeit der Maschine, was in geringen Maschinenstandzeiten und damit hohen Stückkosten resultiert. Darüber hinaus führt die Schonplatte, Schonmatte oder dergleichen zu einer "Überdimensionierung" des Vakuumsystems, um so noch verhältnismäßig akzeptable Standzeiten erreichen zu können. Dies geht mit erhöhten Energie- und damit Betriebskosten der Vorrichtungen aus dem S.d.T. einher und begründet deren hohe Systemkosten.
Aus diesem Grund wurde im Rahmen der vorliegenden Erfindung nach einem Weg gesucht, ein Bearbeiten ohne Schonplatte, Schonmatte oder dergleichen zu ermöglichen.
Erfindungsgemäß wird dies mit dem Verfahren nach Patentanspruch 1 sowie der Vorrichtung nach Patentanspruch 6 ermöglicht. Bevorzugte Ausgestaltungen ergeben sich aus den jeweiligen Unteransprüchen.
Im Rahmen des erfindungsgemäßen Verfahrens wird ein zu bearbeitendes Werkstück zu einer Bearbeitungseinrichtung mittels einer ersten Fördereinrichtung gefördert. Anschließend wird das Werkstück mit der Bearbeitungseinrichtung aufgeteilt, wobei die Bearbeitung zumindest abschnittsweise entlang einer gesamten Werkstückdicke erfolgt. Dabei ragt die Bearbeitungseinrichtung bevorzugt zumindest abschnittsweise in die durch die Werkstückauflage festgelegte Ebene hinein. Die Bearbeitung erfolgt dabei bevorzugt mit einem Fräswerkzeug, wobei hier auch jedes andere beliebige Werkzeug zum Bearbeiten, z.B. ein Laser- oder Wasserstrahl oder dergleichen sowie eine Kombination dieser denkbar sind. Dabei wird die zum Bearbeiten erforderliche Relativbewegung zwischen der Bearbeitungseinrichtung und dem Werkstück zumindest teilweise durch die erste Fördereinrichtung herbeigeführt, indem diese das Werkstück relativ zur Bearbeitungseinrichtung fördert.

Dieses erfindungsgemäße Verfahren ermöglicht dabei ein Bearbeiten ohne Schonplatte, Schonmatte oder dergleichen, da die Werkstücke in einem "Quasi-Durchlaufverfahren" bearbeitet werden. So bewegt sich die Bearbeitungseinrichtung zum Bearbeiten des Werkstücks in einem vorbestimmten beschränkten Bereich, da die zum Bearbeiten erforderliche Relativbewegung zwischen Werkstück und Einrichtung zumindest teilweise durch die erste Fördereinrichtung herbeigeführt wird und sich die Bearbeitungseinrichtung damit nur begrenzt über das Werkstück bewegt. In diesem vorbestimmten Bewegungsbereich der Bearbeitungseinrichtung können somit spezielle Vorkehrungen getroffen werden, z.B. Freiräume in einer Werkstückeauflagefläche geschaffen werden, sodass hier keine "Pufferzone" für die Bearbeitungseinrichtung, mit der eine Beschädigung der Bearbeitungseinrichtung vermieden wird, und damit auch keine Schonplatte, Schonmatte oder dergleichen erforderlich ist. Durch das Vorsehen der zwei Fördereinrichtungen ist es ferner beispielsweise möglich, ein herausgetrenntes Teilstück und das Werkstück, aus dem das Teilstück herausgetrennt wurde, durch sich voneinander entfernende Bewegungen örtlich voneinander zu trennen. So werden beide aus der Bearbeitungszone herausgefördert, sodass ein Freiraum geschaffen wird, um das Werkstück, aus dem das Teilstück herausgetrennt wurde, der Bearbeitungseinrichtung erneut zuführen zu können, um ggf. ein weiteres Teilstück aus dem Werkstück herauszutrennen zu können. Ebenso ist es beispielsweise möglich, dass beide Fördereinrichtungen das Werkstück gemeinsam von der Bearbeitungseinrichtung weg fördern. Das Vorsehen beider Fördereinrichtungen ermöglicht damit eine erhöhte Bearbeitungsvariabilität.

Bevorzugt ist dabei die Förderrichtung, mit der das Werkstück durch die erste Fördereinrichtung zur Bearbeitungseinrichtung gefördert wird, entgegengesetzt zur Richtung angeordnet, mit der ein Werkstück durch die erste Fördereinrichtung von der Bearbeitungseinrichtung weg gefördert wird. Dies ermöglicht eine einfach und kostengünstig ausgestaltete erste Fördereinrichtung, da diese lediglich entlang einer Achse verfahrbar sein muss.

Ferner kann die zweite Fördereinrichtung ein Werkstück in die gleiche Richtung von der Bearbeitungseinrichtung weg fördern, wie die erste Fördereinrichtung das Werkstück zur Bearbeitungseinrichtung fördert. Dies führt zu dem Vorteil, dass das Verfahren in einem kompakten Bearbeitungsraum ausführbar ist, da Zuführung des Werkstücks zur Bearbeitungseinrichtung und Abtransport auf einer Linie angeordnet sein können.

Gemäß einer bevorzugten Ausführungsform wird das Werkstück während des Bearbeitens zumindest abschnittsweise durch die erste und zweite Fördereinrichtung gefördert. Dies führt zu einem Überlappungsbereich der Fördereinrichtungen, bei dem sowohl die erste als auch die zweite Fördereinrichtung das Werkstück fördern. Damit gelangt beispielsweise ein herausgetrenntes Teilstück zum Zeitpunkt des vollständigen Heraustrennens umgehend in den Eingriff der zweiten Fördereinrichtung, um aus dem Bearbeitungsbereich heraustransportiert zu werden. Diese Ausgestaltung ermöglicht somit beispielsweise kurze Fertigungszeiten und daher geringe Stückkosten.

In einer bevorzugten Ausführungsform wird das Werkstück während des Bearbeitens zumindest abschnittsweise durch eine Andrückeinrichtung bevorzugt kraftgeregelt an eine Werkstückauflage angedrückt. Das Andrücken des Werkstücks an eine Werkstückauflage führt zu einer Fixierung des Werkstücks. Ferner verhindert das bevorzugte kraftgeregelte Andrücken ein Beschädigen des Werkstücks durch die Andrückeinrichtung, was insbesondere bei beispielsweise beschichteten Werkstückplatten von Vorteil ist, da bei diesen schon leichte Überlasten zu einer Beschädigung der Beschichtungsoberfläche führen können. Diese Andrückung kann dabei beispielsweise erst während der Bearbeitung aufgebaut werden.

Bevorzugt kann das Verfahren dem Aufteilen eines Werkstücks dienen. Dabei wird mittels der Bearbeitungseinrichtung ein Teilstück aus einem Ausgangswerkstück herausgetrennt, wobei das herausgetrennte Teilstück mittels der zweiten Fördereinrichtung von der Bearbeitungseinrichtung weg gefördert wird und das Werkstück, aus dem das Teilstück herausgetrennt wurde, mittels der ersten Fördereinrichtung von der Bearbeitungseinrichtung weg gefördert wird. Diese Ausführungsform ermöglicht somit ein Aufteilen eines Werkstücks ohne Schonplatte, Schonmatte oder dergleichen.

Bevorzugt weist das Verfahren zum Aufteilen eines Werkstücks ferner einen weiteren Schritt zum Fördern des Werkstücks, aus dem das Teilstück herausgetrennt wurde, zu der Bearbeitungseinrichtung mit der ersten Fördereinrichtung auf, um ein weiteres Teilstück aus dem Werkstück herauszutrennen. So lassen sich aus einem Ausgangswerkstück mehrere Teilstücke heraustrennen, was einen effizienten Bearbeitungsvorgang ermöglicht. Dabei erfolgt die Förderung des Werkstücks,aus dem das Teilstück herausgetrennt wurde, zu der Bearbeitungseinrichtung bevorzugt in die gleiche Richtung, wie die Förderung des Ausgangswerkstücks. Dies ermöglicht eine einfache und kostengünstig ausgestaltete erste Fördereinrichtung, da diese lediglich zur Werkstückförderung in eine Richtung ausgelegt sein muss.

Gemäß einer weiteren Zielrichtung stellt die Erfindung eine Vorrichtung zum Ausführen des zuvor beschriebenen Verfahrens bereit. Diese Vorrichtung weist eine Werkstückauflage zum Aufnehmen eines Werkstücks und eine Stützeinrichtung auf, die sich zumindest abschnittsweise über die Werkstückauflage erstreckt. Dabei kann die Stützeinrichtung beispielsweise ein Portal sein, welches die Werkstückauflage vollständig überspannt. Es ist jedoch auch eine Stützeinrichtung denkbar, die lediglich einen Ausleger aufweist, der sich zumindest abschnittsweise über der Werkstückauflage erstreckt. Auch jegliche andere Ausgestaltungen sind hier möglich, sofern sie sich zumindest abschnittsweise über die Werkstückauflage erstrecken können. Ferner umfasst die Vorrichtung eine Bearbeitungseinrichtung, die zum Bearbeiten des Werkstücks, wobei die Bearbeitung zumindest abschnittsweise entlang einer gesamten Werkstückdicke erfolgt, ausgestaltet ist. Daher weist die Vorrichtung bevorzugt Freiräume oder dergleichen unterhalb der Bearbeitungseinrichtung auf, sodass diese in die Höhenerstreckungsrichtung der Vorrichtung bevorzugt so verfahrbar ist, dass sie in eine durch die Werkstückauflage definierte Ebene hineinragen kann. Die Freiräume oder dergleichen können dabei in der Werkstückauflage angeordnet sein. Diese Bearbeitungseinrichtung weist bevorzugt eine Fräseinrichtung auf und ist an der Stützeinrichtung so angebracht, dass diese entlang der Stützeinrichtung über die Werkstückauflage zumindest teilweise verfahrbar ist. Dabei ist die Bearbeitungseinrichtung nicht auf eine Fräseinrichtung beschränkt. So sind hier beispielsweise auch eine Laser- und/oder eine Wasserstrahleinrichtung und/oder eine Bohreinrichtung oder dergleichen oder eine Kombination derer denkbar. Bevorzugt ist die Bearbeitungseinrichtung auch in die Höhenerstreckungsrichtung der Stützeinrichtung des Werkstücks bewegbar vorgesehen. Ferner weist die Vorrichtung eine erste Fördereinrichtung zum Fördern eines Werkstücks zu und weg von der Bearbeitungseinrichtung, sowie eine zweite Fördereinrichtung zum Fördern eines Werkstücks weg von der Bearbeitungseinrichtung auf. Für die Vorteile dieser Vorrichtung wird auf die Vorteile des entsprechenden zuvor beschriebenen Verfahrens verwiesen.

Die Bearbeitungseinrichtung ist in Förderrichtung des Werkstücks zu der Bearbeitungseinrichtung vor der zweiten Fördereinrichtung angeordnet, wobei die erste und zweite Fördereinrichtung sich zumindest abschnittsweise überschneiden. Für die Vorteile dieser Ausgestaltung wird auf die zuvor ausgeführten Vorteile hinsichtlich des entsprechenden Verfahrensschritts verwiesen. Wenn die zweite Fördereinrichtung aus Rollen ausgestaltet ist, kann die Bearbeitungseinrichtung auch zwischen einzelnen Förderrollen dieser zweiten Fördereinrichtung angeordnet sein.

Bevorzugt ist die Bearbeitungseinrichtung dabei nicht in die Förderrichtung der ersten und zweiten Fördereinrichtung bewegbar vorgesehen. Dies führt zu dem Vorteil, dass die Bearbeitungseinrichtung in Förderrichtung an einer festen Position angeordnet ist, sodass hier spezielle Vorkehrungen getroffen werden können, z.B. Freiräume in der Werkstückauflage geschaffen werden können, sodass hier keine "Pufferzone" für die Bearbeitungseinrichtung erforderlich ist.

Gemäß einer bevorzugten Ausgestaltung ist die zweite Fördereinrichtung in die Werkstückauflage integriert, wobei diese bevorzugt in Form von zumindest einer antreibbaren Rolle oder einem antreibbaren Förderband ausgestaltet ist. Dies ermöglicht einen einfachen Maschinenaufbau, da Fördereinrichtung und Werkstückauflage in einem Bauteil vereint werden. Die bevorzugte Ausgestaltung durch zumindest eine antreibbare Rolle oder ein antreibbares Förderband ermöglicht dabei einen günstigen und wenig komplexen Aufbau der Fördereinrichtung.

Bevorzugt ist die erste Fördereinrichtung in Form von einer Greifeinrichtung zum Greifen des Werkstückes ausgestaltet. Durch die Greifeinrichtung kann auf eine einfache Weise eine feste Verbindung zwischen der ersten Fördereinrichtung und dem Werkstück realisiert werden, um so beispielsweise das Werkstück eindeutig positionieren zu können. Die feste Verbindung ermöglicht ferner in dem Fall, bei dem sich erste und zweite Fördereinrichtung örtlich überschneiden und die zweite Fördereinrichtung nicht so ausgestaltet ist, dass eine feste Verbindung zwischen dieser und dem Werkstück vorliegt, dass das Werkstück, welches mit der ersten Fördereinrichtung im Eingriff ist, lediglich durch diese bewegt wird. In solch einem Fall greift die zweite Fördereinrichtung somit nur für Teilwerkstücke, die aus der Einheit aus erster Fördereinrichtung und Werkstück herausgetrennt wurden. Bevorzugt weist die Greifeinrichtung dabei mehrere Greifzangen auf, die es ermöglichen, dass Werkstück beispielsweise entlang dessen gesamten Breite zu fixieren. Besonders bevorzugt sind diese mehreren Greifzangen dabei zusätzlich relativ zueinander bewegbar, sodass die Angriffspunkte der Greifzangen verschiebbar sind. Dies ermöglicht eine größere Bearbeitungsvielfalt, da so potentielle Kollisionen zwischen erster Fördereinrichtung und beispielsweise Bearbeitungseinrichtung verhindert werden können.

Gemäß einer weiteren Ausführungsform weist die Vorrichtung ferner eine Andrückeinrichtung zum Andrücken des Werkstücks an die Werkstückauflage auf, wobei die Andrückeinrichtung bevorzugt an der Stützeinrichtung in Förderrichtung des Werkstücks zu der Bearbeitungseinrichtung hinter der Bearbeitungseinrichtung angebracht ist. Die Andrückeinrichtung ermöglicht dabei ein Fixieren des Werkstücks auf der Werkstückauflage, wobei die bevorzugte Montage an der Stützeinrichtung einen einfachen Systemaufbau ermöglicht, da so kein zusätzlicher Träger für die Andrückeinrichtung erforderlich ist. Die Anordnung der Andrückeinrichtung hinter der Bearbeitungseinrichtung verhindert oder zumindest minimiert ein potentielles "Werkstückflattern" während der Bearbeitung und ermöglicht damit eine verbesserte Bearbeitungsqualität.

Die Andrückeinrichtung kann dabei so ausgestaltet sein, dass das Werkstück kraftgeregelt an die Werkstückauflage angedrückt wird. Hier wird auf die zuvor erwähnten Vorteile hinsichtlich des entsprechenden Verfahrensschritts verwiesen.

Gemäß einer bevorzugten Ausführungsform weist die Andrückeinrichtung dabei mindestens eine Rolle zum Andrücken des Werkstücks auf. Dies ermöglicht eine einfach und kostengünstig ausgestaltete Andrückeinrichtung, die auf eine einfache Weise eine Relativbewegung des Werkstücks zur Andrückeinrichtung ermöglicht, da die Rolle solch einer Bewegung einen geringen Widerstand entgegensetzt. Bevorzugt ist die Rolle dabei antreibbar, um diesen Bewegungswiderstand zusätzlich zu verringern und/oder das Werkstück unterstützend zu fördern.

Gemäß einer weiteren Ausführungsform ist die Rolle der Andrückeinrichtung dabei mit einem Federelement in deren Gravitationsrichtung vorgespannt. Dies führt zu dem Vorteil, dass bei einem potentiellen Lagerspiel der Andrückrolle das Eigengewicht der Rolle beim Aufsetzen der Andrückeinrichtung auf das Werkstück nicht oder nur verringert auf das Werkstück wirkt. Dies ermöglicht eine genauere Regelung der Andrückkraft und führt daher zu einer verbesserten Bearbeitungsqualität. Dabei ist die Rolle bevorzugt durch das Federelemente so vorgespannt, dass die Federvorspannkraft der Gewichtskraft der Andrückrolle entspricht. Ferner kann die Rolle der Andrückeinrichtung zusätzlich mit einem weiteren Federelement entgegen der Gravitationsrichtung vorgespannt sein.

### Kurze Beschreibung der Zeichnungen

Fig. 1 zeigt eine perspektivische Seitenansicht einer Vorrichtung zum Bearbeiten eines Werkstücks gemäß einer bevorzugten Ausführungsform der vorliegenden Erfindung.
Fig. 2 zeigt eine perspektivische Seitenansicht eines Hauptbereichs der Vorrichtung zum Bearbeiten eines Werkstücks gemäß der bevorzugten Ausführungsform der vorliegenden Erfindung.
Fig. 3 zeigt eine perspektivische Rückansicht des Portals der Vorrichtung zum Bearbeiten eines Werkstücks gemäß der bevorzugten Ausführungsform der vorliegenden Erfindung.
Fig. 4 zeigt eine Detailansicht der Aufhängung der Andrückeinrichtung der Vorrichtung zum Bearbeiten eines Werkstücks gemäß der bevorzugten Ausführungsform der vorliegenden Erfindung.
Fig. 5 zeigt eine perspektivische Draufsicht auf den Andrückrollenträger der Andrückeinrichtung der Vorrichtung zum Bearbeiten eines Werkstücks gemäß der bevorzugten Ausführungsform der vorliegenden Erfindung.
Fig. 6 zeigt eine Seitensicht einer Andrückrolle der Andrückeinrichtung der Vorrichtung zum Bearbeiten eines Werkstücks gemäß der bevorzugten Ausführungsform der vorliegenden Erfindung.
Fig. 7 zeigt eine Schnittansicht entlang der Linie A-A in Fig. 6.
Fig. 8 zeigt eine Schnittansicht entlang der Linie B-B in Fig. 6.

### Detaillierte Beschreibung einer bevorzugten Ausführungsform

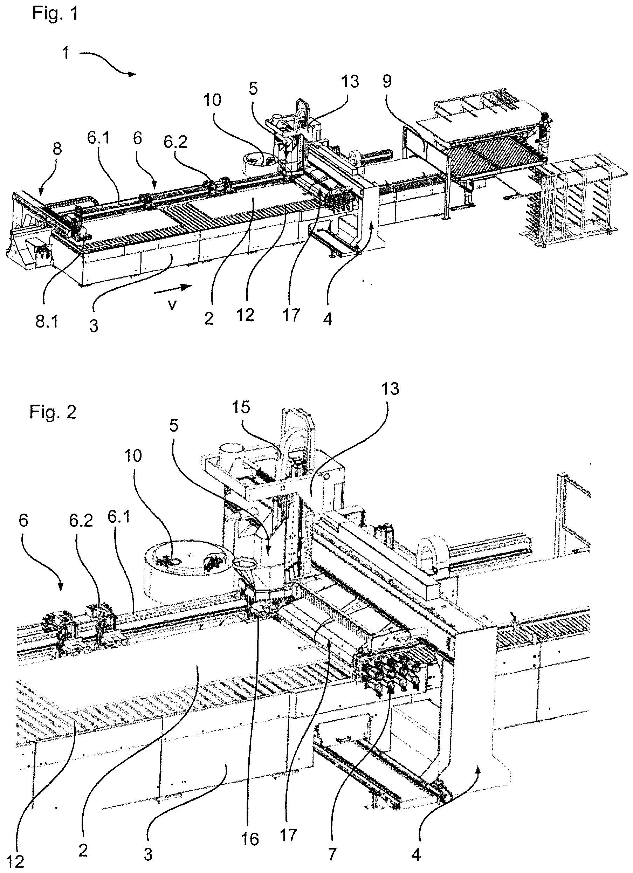

Fig. 1 zeigt eine perspektivische Seitenansicht einer Vorrichtung 1 zum Bearbeiten eines Werkstücks 2 gemäß einer bevorzugten Ausführungsform der vorliegenden Erfindung. Die Vorrichtung 1 dieser bevorzugten Ausführungsform ist dabei vor allem eine Vorrichtung zum Aufteilen eines Werkstücks 2.

Das Werkstück besteht bevorzugt zumindest abschnittsweise aus Holz, Holzwerkstoffen, Kunststoff, Gips, Verbundwerkstoffen, Zementfaser oder dergleichen, wie es beispielsweise im Bereich der Möbel- und Bauelementeindustrie zum Einsatz kommt. Dabei handelt es sich bevorzugt um ein plattenförmiges Werkstück, wie beispielsweise eine Massivholz- oder Spannplatte, eine Leichtbauplatte, eine Gipsplatte, eine Zementfaserplatte oder eine Sandwichplatte. Es ist jedoch zu beachten, dass die vorliegende Erfindung nicht auf ein derartiges Werkstück beschränkt ist. Ferner sei vermerkt, dass die Vorrichtung 1 auch zum Bearbeiten mehrerer Werkstücke geeignet ist.

Die Vorrichtung 1 weist eine Werkstückauflage 3 zum Aufnehmen des Werkstücks 2, eine Stützeinrichtung 4, eine Bearbeitungseinrichtung 5, eine erste Fördereinrichtung 6, eine zweite Fördereinrichtung 7, eine Kennzeichnungseinrichtung 8, eine Lesereinrichtung 9 sowie eine Werkzeugwechseleinrichtung 10 auf.

Die Werkstückauflage 3 weist in der vorliegenden Ausführungsform eine längliche Gestalt mit einer rechteckigen Querschnittsform auf, wobei die Oberseite der Werkstückauflage 3 dabei durch sich quer zur Förderrichtung v der Werkstückauflage 3 erstreckende Förderrollen 12 ausgebildet ist. Die Förderrollen 12 bilden dabei eine ebene Werkstückauflagefläche, sind mit einem Zwischenraum, welcher in etwa dem Durchmesser einer Förderrolle entspricht, beabstandet zueinander angeordnet und erstrecken sich von einer Längsseite der Werkstückauflage 3 zur anderen. In der vorliegenden Ausführungsform wird ein Großteil der Förderrollen 12 über einen nicht gezeigten Riemen angetrieben, der bevorzugt in einem Seitenbereich der Förderrollen 12 angeordnet ist und die entsprechenden Förderrollen 12 umschlingt. Der Riemen kann dabei beispielsweise über eine nicht gezeigte Königswelle angetrieben werden. Auf Grund der Reibung zwischen Riemen und Förderrollen 12, wird dabei ein Drehmoment des Riemens an die Förderrollen 12 übertragen, was ein Antreiben der entsprechenden Förderrollen 12 ermöglicht. Hier sei darauf hingewiesen, dass die vorliegende Erfindung nicht auf die zuvor beschriebene Ausgestaltung der Werkstückauflage 3 beschränkt ist. So sind jegliche andere Werkstückauflagen denkbar, die zum Aufnehmen eines Werkstücks geeignet sind. Bei Ausführungsformen, die Förderrollen 12 aufweisen, sind neben dem Riemenantrieb beispielsweise auch durch einzelne Motoren angetriebene Förderrollen oder über eine Kette angetriebene Förderrollen denkbar. Auch eine Ausgestaltung mit Bürsten, Bürstenrollen oder Bürstenbändern ist hier insbesondere für die Bearbeitung von empfindlichen Materialien denkbar.

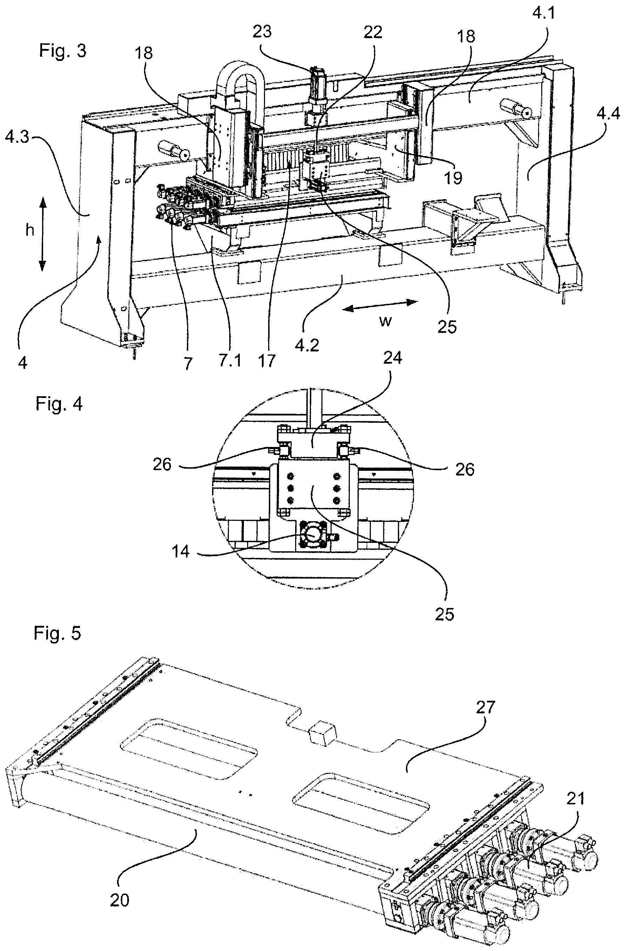

Die Vorrichtung 1 weist ferner eine Stützeinrichtung 4 auf, die in dieser bevorzugten Ausführungsform in Form eines Portals, welches die Werkstückauflage 3 quer zur Förderrichtung v überspannt, ausgestaltet ist. Wie aus Fig. 3 ersichtlich, ist die Stützeinrichtung 4 aus zwei Längsträgern 4.1 und 4.2 sowie zwei seitlichen Ständern 4.3 und 4.4 ausgestaltet, wobei die Längsträger 4.1 und 4.2 sich von einem seitlichen Ständer zum anderen erstrecken. Die Stützeinrichtung 4 ist dabei so angeordnet, dass sich die Längsträger 4.1 und 4.2 über die Werkstückauflage 3, also quer zur Förderrichtung v der Werkstückauflage 3, erstrecken. Dabei ist der obere Längsträger 4.1 oberhalb der Oberseite, also den Förderrollen 12, und der untere Längsträger 4.2 unterhalb der Oberseite der Werkstückauflage 3 angeordnet. Die Länge der Stützeinrichtung 4 ist dabei größer als die Breite der Werkstückauflage 3, sodass sich die Stützeinrichtung 4 über die Werkstückauflage 3 beidseitig hinaus erstreckt. Am oberen Längsträger 4.1 ist ein in Längserstreckungsrichtung w der Stützeinrichtung 4 verfahrbarer Schlitten 13 vorgesehen, wie aus Figur 2 ersichtlich. Dieser Schlitten 13 wird bevorzugt durch eine nicht gezeigte Antriebseinrichtung angetrieben. Der in Längserstreckungsrichtung w der Stützeinrichtung 4 verfahrbare Schlitten 13 wird dabei über eine nicht gezeigte Führungseinrichtung, die seitlich an dem oberen Längsträgers 4.1 der Stützeinrichtung 4 angeordnet ist, in die Verfahrrichtung des Schlittens 13, also in die Längserstreckungsrichtung w der Stützeinrichtung 4 beziehungsweise quer zur Förderrichtung v der Werkstückaufnahme 3, geführt. Bevorzugt ist die Stützeinrichtung 4 dabei in Förderrichtung v der Werkstückauflage 3 an fester Position angeordnet. Auch eine verfahrbare Stützeinrichtung 4 ist hier denkbar.

Am Schlitten 13 der Stützeinrichtung 4 ist eine Bearbeitungseinrichtung 5, wie aus Fig. 2 ersichtlich, angeordnet. Die Bearbeitungseinrichtung 5 ist über eine Verstelleinrichtung 15 in Höhenerstreckungsrichtung h der Stützeinrichtung 4 verstellbar. In dieser bevorzugten Ausführungsform weist die Bearbeitungseinrichtung 5 ein Fräswerkzeug 16 zum Bearbeiten, insbesondere Aufteilen, des Werkstücks 2 auf. Hier sind auch beliebige andere Bearbeitungswerkzeuge, z.B. ein Wasser- oder Laserstrahl, eine Säge oder ein Bohrer, denkbar.

Auf einer Seite der Vorrichtung 1 weist die Vorrichtung 1 darüber hinaus eine Werkzeugwechseleinrichtung 10 auf, die so angeordnet ist, dass die Bearbeitungseinrichtung 5 durch einen Verstellvorgang in Höhenerstreckungsrichtung h und Längserstreckungsrichtung w der Stützeinrichtung 4 Zugriff auf ein in der Wechseleinrichtung 10 enthaltenes Werkzeugreservoir hat. Mit der Wechseleinrichtung 10 lässt sich dabei das Bearbeitungswerkzeug 16 der Bearbeitungseinrichtung 5 wechseln.

Darüber hinaus umfasst die Vorrichtung 1 eine erste Fördereinrichtung 6, die in Form von einer Führungseinrichtung 6.1 und bevorzugt mehr als zwei Greifzangen 6.2 ausgestaltet ist. In der vorliegenden Ausführungsform weist die Fördereinrichtung 6 vier Greifzangen 6.2 auf. Die Führungseinrichtung 6.1 ist dabei seitlich in Förderrichtung v der Werkstückauflage 3 auf Höhe der Werkstückauflagenoberseite angeordnet und erstreckt sich annährungsweise entlang der vollständigen Werkstückauflagenlänge. Die Greifzangen 6.2 sind an der Führungseinrichtung 6.1 entlang der Förderrichtung v der Werkstückauflage 3 unabhängig voneinander verschiebbar. Die Verschiebungen der einzelnen Greifzangen 6.2 sind in dieser bevorzugten Ausführungsform dabei separat antreibbar. Die Greifzangen 6.2 sind so ausgestaltet, dass sie in deren Höhenerstreckungsrichtung aufeinander zu und voneinander weg bewegbare Greifbacken aufweisen, zwischen denen ein Werkstück 2 einklemmbar ist. Hier sei darauf hingewiesen, dass die vorliegende Erfindung jedoch nicht auf solch eine Ausgestaltung der ersten Fördereinrichtung 6 beschränkt ist.

Die zweite Fördereinrichtung 7 ist in der vorliegenden bevorzugten Ausführungsform durch vier separat antreibbare Rollen ausgestaltet. Diese vier Antriebsrollen sind dabei in Förderrichtung v hinter der Bearbeitungseinrichtung 5 angeordnet und erstecken sich analog zu den Förderrollen 12 von einer Seite der Werkstückauflage 3 zur anderen. Dabei sind diese jedoch nicht in der Werkstückauflage 3 gelagert, wie aus Fig. 3 ersichtlich, sondern über einen separaten Träger 7.1 an dem unteren Längsträger 4.2 der Stützeinrichtung 4 fixiert. Der separate Träger 7.1 ist dabei so ausgestaltet, dass die Antriebsrollen mit den anschließenden Förderrollen 12 der Werkstückaufnahme 3 eine ebene Oberfläche bereitstellen.

Die Vorrichtung 1 weist ferner eine Andrückeinrichtung 17 auf. Die Andrückeinrichtung 17 ist in Förderrichtung v hinter der Bearbeitungseinrichtung 5 an der Stützeinrichtung 4 über den oberen Längsträger 4.1 gelagert. Dabei ist die Andrückeinrichtung 17 in die Höhenerstreckungsrichtung h der Stützeinrichtung 4 verstellbar. Wie aus Fig. 3 ersichtlich, weist der obere Längsträger 4.1 der Stützeinrichtung 4 zwei vertikale Laufschienen 18 auf, die fest mit dem Längsträger 4.1 verbunden sind. An den Laufschienen 18 ist ein Andrückeinrichtungsgrundträger 19 so gelagert, dass dieser entlang der Schienen 18 in die Richtung h verstellbar ist. Am unteren Ende der Andrückeinrichtung 17 sind mehrere Andrückrollen 20, in der vorliegenden Ausführungsform vier, in einer Ebene parallel zur Oberseite der Werkstückauflage 3 angebracht. In dieser bevorzugten Ausführungsform sind diese Andrückrollen 20 der Andrückeinrichtung 17 in Höhenerstreckungsrichtung h der Stützeinrichtung 4 direkt oberhalb der Förderrollen der zweiten Fördereinrichtung 7 positioniert. Die Andrückrollen weisen dabei jeweils einen eigenen Antriebsmotor 21 auf. Auch eine Ausgestaltung bei der die einzelnen Andrückrollen 20 keinen eigenen Antriebsmotor aufweisen ist hier denkbar. Ferner kann die Andrückeinrichtung auch ein Förderband oder dergleichen zum Andrücken des Werkstücks aufweisen.

Der Andrückeinrichtungsgrundträger 19 ist über eine Kugelumlaufspindel 22, geführt über die Lagerschienen 18, in die Höhenerstreckungsrichtung h der Stützeinrichtung 4 verfahrbar. Dabei wird die Kugelumlaufspindel 22 über einen eigenen Motor 23 angetrieben. Die Kugelumlaufspindel 22 ist dabei an deren oberen Ende in Förderrichtung v am hinteren Ende des Längsträgers 4.1 der Stützeinrichtung 4 gelagert, wobei diese Lagerung zentriert zwischen den Laufschienen 18 und mittig zwischen den Ständern 4.3 und 4.4 der Stützeinrichtung 4 vorgesehen ist. Die Andrückeinrichtung 17 weist eine Spindelmutter 24 auf, die mit der Kugelumlaufspindel 22 im Eingriff ist. Durch Rotation der Kugelumlaufspindel 22 mittels des Motors 23 ist die Spindelmutter 24 entlang der Kugelumlaufspindel 22 in die Richtung h verfahrbar. Mit dem Andrückeinrichtungsgrundträger 19 ist eine Trägereinrichtung 25 verbunden, die unterhalb der Spindelmutter 24 angeordnet ist. Die Trägereinrichtung 25 weist ferner einen Verstellzylinder 14 auf, über den sich ein Andrückrollenträger 27 entlang der Förderrichtung v verstellen lässt, um den Abstand des Trägers 27 zu der Bearbeitungseinrichtung 5 anpassen zu können.

Dabei ist die Spindelmutter 24 mit der Trägereinrichtung 25 lediglich über 2 Kraftsensoren 26 verbunden, sodass die einzige Verbindung des Andrückeinrichtungsgrundträgers 19 mit der Spindelmutter 24 diese Kraftsensoren 26 darstellen, wie aus Fig. 4 ersichtlich. Mittels dieser Kraftsensoren 26 ist daher die auf ein Werkstück 2 wirksame Andrückkraft ermittelbar, da über die Kraftsensoren 26 das auf das Werkstück 2 wirksame Eigengewicht der Andrückeinrichtung 17 ermittelt werden kann. Somit wird mit der vorliegenden Andrückeinrichtung 17 der bevorzugen Ausführungsform eine kraftgeregelte Andrückung ermöglicht. Dies ermöglicht die Bearbeitung von leicht beschädigbaren Materialien mit einer hohen Bearbeitungsqualität. Die Vorrichtung 1 weist ferner eine nicht gezeigte Regeleinrichtung auf, mit der die eine kraftgeregelte Andrückung des Werkstücks 2 mittels der Kraftsensoren 26 realisierbar ist.

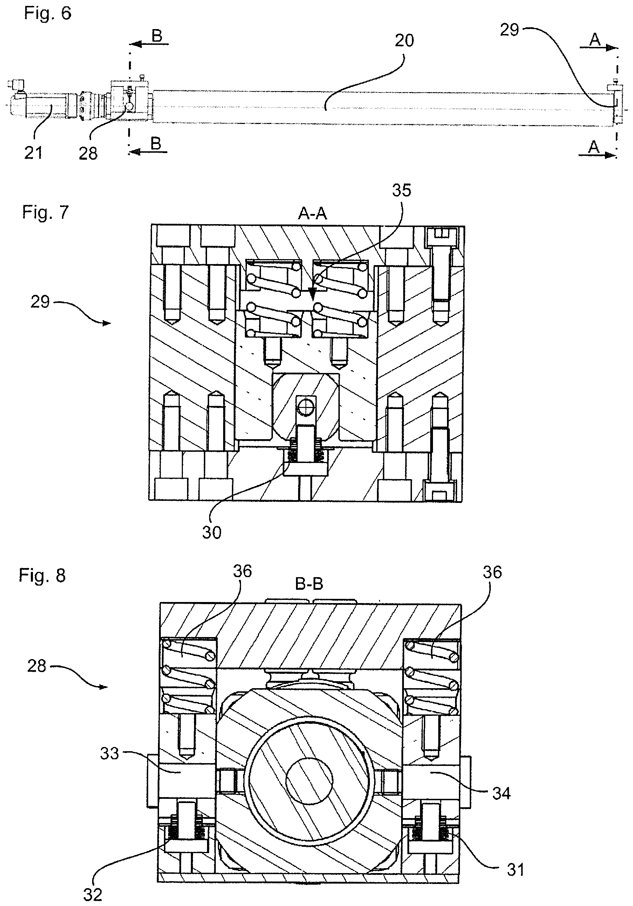

Die Andrückrollen 20 sind in dem Andrückrollenträger 27 vorgesehen, der mit dem Andrückeinrichtungsgrundträger 19 fest verbunden ist. Dabei weisen die einzelnen Andrückrollen 20 seitliche Lagerelemente 28 und 29 auf, die jeweils fest mit dem Andrückrollenträger 27 verbunden sind, wie aus Figs. 5 und 6 ersichtlich. Die Lagerelemente 28 und 29 umfassen, wie in Figs. 7 und Fig. 8 dargestellt, Vorspannelemente 30 bzw. 31 und 32, welche die Andrückrollen 20 in die Höhenerstreckungsrichtung h der Vorrichtung 1 vorspannen. Dabei ist das Vorspannelement 30, welches in dem Lagerelement 29 der Andrückrolle 20, also in dem Lagerelement, welches auf der vom Motors 21 abgewandten Seite angeordnet ist, am unteren Ende des Lageelementes 29 mittig unterhalb der mittig angeordneten Andrückrolle 20 vorgesehen, sodass die Andrückrolle 20 in deren Gravitationsrichtung durch das Vorspannelement 30 vorgespannt wird. Die Vorspannelemente 31 und 32, welche die Andrückrolle 20 in dem Lagerelement 28 in deren Gravitationsrichtung vorspannen, welches auf der Seite des Motors 21 angeordnet ist, sind an den unteren Seitenregionen des Lagerelementes 28 vorgesehen. Dabei spannen die Vorspannelemente 31 und 32 Stifte 33 und 34, die fest mit der Andrückrolle an sich gegenüberliegenden Seiten verbunden sind vor, wobei die Stifte 33 und 34 horizontal auf einer Linie und mittig der Andrückrolle 20 angeordnet sind. Die Vorspannelemente 30, 32 und 34 sind bevorzugt Blattfedern, wobei hier jegliche andere Elemente zum Vorspannen denkbar sind. Ferner wird die Andrückrolle 20 bevorzugt zusätzlich entgegen deren Gravitationsrichtung mit Vorspannelementen 35, 36, die jeweils mittig im oberen Bereich der Lagerelemente 28, 29 angeordnet sind, vorgespannt.

Durch diese bevorzugte Ausgestaltung, bei welcher die Andrückrollen 20 durch Vorspannelemente 30, 31 und 32 in deren Gravitationsrichtung vorgespannt werden, kann bei einem potentiellen Lagerspiel der Andrückrollen 20 verhindert werden, dass beim Aufsetzen der Andrückeinrichtung 17 auf das Werkstück 2 das Eigengewicht der Andrückrollen 20 auf das Werkstück 2 wirkt. Durch diese bevorzugte Ausgestaltung ist daher eine präzisere Kraftregelung über die Kraftsensoren 26 möglich, was eine Bearbeitung mit einer höheren Qualität und geringeren Ausschussquote ermöglicht. Darüber hinaus ermöglichen die Vorspannelemente 35, 36 ebenfalls eine präzisere Kraftregelung, da sie den Andrückrollenträger 27 und weitere Elemente der Andrückeinrichtung 17 in deren Gravitationsrichtung vorspannen.

Darüber hinaus weist die Vorrichtung 1 eine Kennzeichnungseinrichtung 8 auf, die in Förderrichtung v am vorderen Ende der Werkstückauflage 3 angeordnet ist. Mit der Kennzeichnungseinrichtung 8 lassen sich werkstückspezifische Identifikationen auf das Werkstück 2 drucken. So lassen sich beispielsweise Strichcodes, Barcodes, Etiketten oder sonstige Indentifikationskennungen auf das Ausgangwerkstück drucken, um so beispielsweise die Teilstücke, die aus dem Ausgangswerkstück 2 herausgetrennt wurden, über solch eine Kennung, die diese Teilstücke jeweils auf der Oberseite aufweisen, anschließend identifizieren zu können. Die Kennzeichnungseinrichtung 8 weist dabei beispielsweise einen Druckkopf 8.1 auf, der über das Werkstück 2 in Längs- und Querrichtung verfahrbar ist.

Ferner weist die Vorrichtung 1 eine Leseeinrichtung 9 auf, die in Förderrichtung v am hinteren Ende der Werkstückauflage 3 angeordnet ist. Die Leseeinrichtung 9 ist dabei in Form eines Portals ausgestaltet, welches die Werkstückauflage 3 quer zur Förderrichtung v überspannt. Mittels der Leseeinrichtung 9 lassen sich beispielsweise die aus dem Werkstück 2 herausgetrennten Teilstücke über deren Identifikationskennung, welche diese auf deren Oberseite aufweisen, indem diese darauf durch die Kennzeichnungseinrichtung 8 gedruckt wurden, identifizieren.

Darüber hinaus ist die Vorrichtung 1 auch dazu geeignet, mehrere Werkstücke gleichzeitig zu bearbeiten. Diese Werkstücke können beispielsweise übereinanderliegend der Bearbeitungseinrichtung zugeführt werden und hier durch die Andrückeinrichtung angedrückt werden, um eine Relativverschiebung der übereinander liegenden Werkstücke zueinander während der Bearbeitung zu unterbinden.

Im Folgenden wird ein Verfahren zum Aufteilen eines Werkstücks mittels der zuvor beschrieben Vorrichtung einer bevorzugten Ausführungsform der vorliegenden Erfindung beschrieben. In einem ersten Schritt wird ein plattenförmiges Werkstück 2 über die Förderrollen 12 der Werkstückauflage 3 in die Förderrichtung v zur Kennzeichnungseinrichtung 8 gefördert. Hier stoppt die Förderung und der Druckkopf 8.1 der Kennzeichnungseinrichtung 8 druckt Identifikationskennungen auf das Werkstück 2. Dabei wird für jedes Teilwerkstück, welches im Folgenden aus dem Ausgangswerkstück 3 herausgetrennt wird, eine Kennung, die bevorzugt mittig auf diesem späteren Teilwerkstück angeordnet ist, gedruckt.

Nun greifen die Greifzangen 6.2 der ersten Fördereinrichtung 6 das Werkstück 2 an einer Längsseite und Fördern dieses in Richtung der Stützeinrichtung 4 mit der Bearbeitungseinrichtung 5, also in die Förderrichtung v. Bei Ankunft an der Stützeinrichtung 4 wird das Werkstück 2 über die Andrückeinrichtung 17 kraftgeregelt an die Werkstückauflage 3 angedrückt. Dabei erfolgt die Andrückung bevorzugt ab dem Zeitpunkt, bei dem das Werkstück 2 in Kontakt mit der Andrückeinrichtung 17 kommt. Dabei wird das Werkstück 2 über die erste Fördereinrichtung 6, die zweite Fördereinrichtung 7 und die Andrückrollen der Andrückeinrichtung 17 in die Förderrichtung v gefördert. All diese Fördereinrichtungen sind dabei bevorzugt miteinander synchronisiert.

Während dieser Förderung in die Förderrichtung v wird die Bearbeitungseinrichtung 5 entlang der Längserstreckungsrichtung w und der Höhenerstreckungsrichtung h der Stützeinrichtung 4 so verfahren, dass ein angestrebtes Teilwerkstück über die Verhältnisse der Bewegungen der Fördereinrichtungen sowie der Bearbeitungseinrichtung 5 aus dem Ausgangswerkstück 2 herausgetrennt wird.

Sobald dieses Teilstück herausgetrennt ist, kommt es in alleinigen Eingriff der zweiten Fördereinrichtung 7 und wird mittels dieser von der Stützeinrichtung 4 und der Bearbeitungseinrichtung 5 in die Förderrichtung v weggefördert. Dabei passiert es die Leseeinrichtung 9, mittels der das Teilwerkstück über dessen Identifikationskennung, die zuvor mit der Kennzeichnungseinrichtung 8 auf dieses heraufgedruckt wurde, identifiziert wird.

Das Ausgangswerkstück 2, aus dem das Teilstück herausgetrennt wurde, ist dabei noch im Eingriff mit der ersten Fördereinrichtung 6, die dieses zeitgleich entgegen der Förderrichtung v von der Bearbeitungseinrichtung 5 wegfördert.

In einem weiteren Schritt wird das Werkstück, aus dem das Teilstück herausgetrennt wurde, mittels der ersten Fördereinrichtung 6 erneut in Richtung der Förderrichtung v zu der Bearbeitungseinrichtung 5 gefördert und der zuvor beschriebene Vorgang wird so oft wiederholt, bis das Werkstück vollständig aufgeteilt wurde.

## Patentansprüche

1. Verfahren zum Aufteilen eines insbesondere plattenförmigen Werkstücks (2), wobei das Werkstück (2) bevorzugt zumindest abschnittsweise aus Holz, Holzwerkstoffen, Kunststoff, Gips, Zementfaser oder dergleichen besteht, mit den Schritten:
Fördern des Werkstücks (2) zu einer Bearbeitungseinrichtung (5) mit einer ersten Fördereinrichtung (6),
Aufteilen des Werkstücks (2) mit der Bearbeitungseinrichtung (5) zum Heraustrennen eines Teilstücks, wobei das Werkstück (2) während der Bearbeitung zumindest teilweise durch die erste Fördereinrichtung (6) gefördert wird und die Bearbeitungseinrichtung (5) das Werkstück (2) zumindest abschnittsweise entlang einer gesamten Werkstückdicke bearbeitet,
Fördern des Werkstücks, aus dem das Teilstück herausgetrennt wurde, weg von der Bearbeitungseinrichtung (5) mit der ersten Fördereinrichtung (6)
Fördern des herausgetrennten Teilstücks weg von der Bearbeitungseinrichtung (5) mit einer zweiten Fördereinrichtung (7),
**dadurch gekennzeichnet, dass**
das Werkstück (2) während des Bearbeitens zumindest abschnittsweise durch die erste und zweite Fördereinrichtung (6, 7) gefördert und während des Bearbeitens zumindest abschnittsweise durch eine Andrückeinrichtung (17) an eine Werkstückauflage (3) angedrückt wird.

2. Verfahren nach Anspruch 1, bei dem die Förderrichtung, mit der die erste Fördereinrichtung das Werkstück zur Bearbeitungseinrichtung fördert, entgegengesetzt zur Förderrichtung, mit der die erste Fördereinrichtung ein Werkstück von der Bearbeitungseinrichtung weg fördert, angeordnet ist.

3. Verfahren nach Anspruch 1 oder 2, bei dem die Förderrichtung, mit der die erste Fördereinrichtung das Werkstück zur Bearbeitungseinrichtung fördert, identisch zu der Förderrichtung ist, mit der die zweite Fördereinrichtung ein Werkstück von der Bearbeitungseinrichtung weg fördert.

4. Verfahren nach einem der vorhergehenden Ansprüche, bei dem das Werkstück (2) durch die Andrückeinrichtung (17) kraftgeregelt angedrückt wird.

5. Verfahren nach Anspruch 1, wobei das Verfahren ferner den Schritt aufweist
Fördern des Werkstücks, aus dem das Teilstück herausgetrennt wurde, mit dem herausgetrennten Teilstück zu der Bearbeitungseinrichtung (5) mit der ersten Fördereinrichtung (6) .

6. Vorrichtung (1) zum Aufteilen, eines insbesondere plattenförmigen Werkstücks, das bevorzugt zumindest abschnittsweise aus Holz, Holzwerkstoffen, Kunststoff, Gips, Zementfaser oder dergleichen besteht, wobei die Vorrichtung (1) zum Ausführen des Verfahrens nach einem der Ansprüche 1 bis 5 geeignet ist und aufweist:
eine Werkstückauflage (3) zum Aufnehmen eines Werkstücks (2),
eine Stützeinrichtung (4), die sich zumindest abschnittsweise über die Werkstückauflage (3) erstreckt,
eine Bearbeitungseinrichtung (5) zum Bearbeiten eines Werkstücks (2), wobei die Bearbeitung zumindest abschnittsweise entlang einer gesamten Werkstückdicke erfolgt, welche Bearbeitungseinrichtung an der Stützeinrichtung (4) über die Werkstückauflage (3) und bevorzugt in deren Höhenerstreckungsrichtung (h) bewegbar angebracht ist,
eine erste Fördereinrichtung (6) zum Fördern eines Werkstücks (2) zu und weg von der Bearbeitungseinrichtung (5),
eine zweite Fördereinrichtung (7) zum Fördern eines Werkstücks weg von der Bearbeitungseinrichtung (5),
bei der die Bearbeitungseinrichtung (5) in Förderrichtung des Werkstücks zur Bearbeitungseinrichtung (5) vor der zweiten Fördereinrichtung (7) angeordnet ist und sich die erste und zweite Fördereinrichtung (6, 7) zumindest abschnittsweise überschneiden,
eine Andrückeinrichtung (17) zum Andrücken des Werkstücks an die Werkstückauflage (3), wobei die Andrückeinrichtung (17) an der Stützeinrichtung (4) in Förderrichtung des Werkstücks zu der Bearbeitungseinrichtung hinter der Bearbeitungseinrichtung (5) angebracht ist,
**dadurch gekennzeichnet, dass**
am unteren Ende der Andrückeinrichtung (17) mehrere Andrückrollen (20) in einer Ebene parallel zur Oberseite der Werkstückauflage (3) angebracht sind.

7. Vorrichtung nach Anspruch 6, bei der die Bearbeitungseinrichtung (5) nicht in die Förderrichtung der ersten und zweiten Fördereinrichtung (6, 7) bewegbar ist.

8. Vorrichtung (1) nach einem der Ansprüche 6 und 7, bei der die zweite Fördereinrichtung (7) in die Werkstückauflage (3), bevorzugt in Form von zumindest einer antreibbaren Rolle oder einem antreibbaren Förderband, integriert ist.

9. Vorrichtung (1) nach einem der Ansprüche 6 bis 8, bei der die erste Fördereinrichtung (6) in Form von einer Greifeinrichtung zum Greifen des Werkstücks (2) ausgestaltet ist, wobei die Greifeinrichtung bevorzugt aus mehreren Greifzangen (6.2) ausgestaltet ist, die besonders bevorzugt relativ zueinander bewegbar sind.

10. Vorrichtung (1) nach einem der Ansprüche 6 bis 9, bei der die Andrückeinrichtung (17) ausgestaltet ist, das Werkstück kraftgeregelt anzudrücken.

11. Vorrichtung (1) nach Anspruch 10, bei der die Andrückeinrichtung (17) in Form von mindestens einer Rolle ausgestaltet ist, die antreibbar ist.

12. Vorrichtung (1) nach Anspruch 11, bei der die Rolle der Andrückeinrichung (17) mit einem Federelement (30, 31, 32) in deren Gravitationsrichtung vorgespannt ist.

## Claims

1. Method for dividing an, in particular panel-formed workpiece (2), wherein the workpiece (2) preferably consists at least in sections of wood, wood materials, plastic, plaster, fibre cement or the like, comprising the steps:
transporting the workpiece (2) to a machining device (5) with a first conveyor device (6),
dividing the workpiece (2) with the machining device (5) in order to separate out a partial section, wherein the workpiece (2) is at least partially transported by the first conveyor device (6) during the machining and the machining device (5) machines the workpiece (2) at least in sections along an entire thickness of the workpiece,
transporting the workpiece, from which the partial section has been separated, away from the machining device (5) with the first conveyor device (6)
transporting the separated partial section away from the machining device (5) with a second conveyor device (7),
**characterised in that**
the workpiece (2) is, during the machining, transported at least in sections by the first and second conveyor device (6, 7) and, during the machining, pressed at least in sections against a workpiece support (3) by a pressing device (17).

2. Method according to claim 1, wherein the direction of transport in which the first conveyor device transports the workpiece to the machining device is arranged opposite to the direction of transport in which the first conveyor device transports a workpiece away from the machining device.

3. Method according to claim 1 or 2, wherein the direction of transport in which the first conveyor device transports the workpiece to the machining device is identical to the direction of transport in which the second conveyor device transports a workpiece away from the machining device.

4. Method according to one of the preceding claims, wherein the workpiece (2) is pressed against by the pressing device (17) with controlled force.

5. Method according to claim 1, wherein the method further comprises the step
Transporting the workpiece, from which the partial section has been separated, with the separated partial section, to the machining device (5) with the first conveyor device (6) .

6. Device (1) for dividing an in particular panel-formed workpiece which preferably consists at least in sections of wood, wood materials, plastic, plaster, fibre cement or the like, wherein the device (1) is suitable for carrying out the method according to one of the claims 1 to 5 and comprises:
a workpiece support (3) to accommodate a workpiece (2),
a supporting device (4) which extends at least in sections over the workpiece support (3),
a machining device (5) for machining a workpiece (2), wherein the machining is carried out at least in sections along an entire thickness of the workpiece, said machining device being attached to the supporting device (4) via the workpiece support (3) and preferably so as to be movable in the direction of its height (h),
a first conveyor device (6) for transporting a workpiece (2) to and away from the machining device (5),
a second conveyor device (7) for transporting a workpiece away from the machining device (5),
wherein the machining device (5) is arranged before the second conveyor device (7) in the direction of transport of the workpiece to the machining device (5) and the first and second conveyor device (6, 7) overlap at least in sections,
a pressing device (17) for pressing the workpiece against the workpiece support (3), wherein the pressing device (17) is attached to the supporting device (4) behind the machining device (5) in the direction of transport of the workpiece to the machining device,
**characterised in that**
several pressure rollers (20) are attached to the lower end of the pressing device (17) in a plane parallel to the upper side of the workpiece support (3).

7. Device according to claim 6, wherein the machining device (5) cannot be moved in the direction of transport of the first and second conveyor device (6, 7).

8. Device (1) according to one of the claims 6 and 7, wherein the second conveyor device (7) is integrated in the workpiece support (3), preferably in the form of at least one driveable roller or a driveable conveyor belt.

9. Device (1) according to one of the claims 6 to 8, wherein the first conveyor device (6) is designed in the form of a gripper device in order to grip the workpiece (2), wherein the gripper device preferably consists of several gripper tongs(6.2) which are particularly preferably movable relative to one another.

10. Device (1) according to one of the claims 6 to 9, wherein the pressing device (17) is designed to press against the workpiece with controlled force.

11. Device (1) according to claim 10, wherein the pressing device (17) is designed in the form of at least one roller which is driveable.

12. Device (1) according to claim 11, wherein the roller of the pressing device (17) is preloaded in its direction of gravitation by means of a spring element (30, 31, 32).

## Revendications

1. Procédé de séparation d'une pièce à usiner (2) en particulier en forme de plaque, dans lequel la pièce à usiner (2) se compose de préférence au moins par section de bois, de matériaux dérivés du bois, de matière plastique, de gypse, de fibres de ciment ou similaire, avec les étapes :
le transport de la pièce à usiner (2) vers un dispositif d'usinage (5) avec un premier dispositif de transport (6),
la séparation de la pièce à usiner (2) avec le dispositif d'usinage (5) pour la séparation d'une pièce partielle, dans lequel la pièce à usiner (2) est transportée pendant l'usinage au moins partiellement par le premier dispositif de transport (6) et le dispositif d'usinage (5) usine la pièce à usiner (2) au moins par section le long d'une épaisseur de pièce à usiner entière,
le transport de la pièce à usiner, de laquelle la pièce partielle a été séparée, loin du dispositif d'usinage (5) avec le premier dispositif d'usinage (6),
le transport de la pièce à usiner séparée loin du dispositif d'usinage (5) avec un second dispositif de transport (7),
**caractérisé en ce que**
la pièce à usiner (2) est transportée pendant l'usinage au moins par section par le premier et le second dispositif de transport (6, 7) et est pressée pendant l'usinage au moins par section par un dispositif de pression (17) contre un appui de pièce à usiner (3).

2. Procédé selon la revendication 1, pour lequel le sens de transport avec lequel le premier dispositif de transport transporte la pièce à usiner vers le dispositif d'usinage, est agencé à l'opposé du sens de transport, avec lequel le premier dispositif de transport transporte une pièce à usiner loin du dispositif d'usinage.

3. Procédé selon la revendication 1 ou 2, pour lequel le sens de transport avec lequel le premier dispositif de transport transporte la pièce à usiner vers le dispositif d'usinage, est identique au sens de transport, avec lequel le second dispositif de transport transporte une pièce à usiner loin du dispositif d'usinage.

4. Procédé selon l'une quelconque des revendications précédentes, pour lequel la pièce à usiner (2) est pressée par le dispositif de pression (17) avec une force régulée.

5. Procédé selon la revendication 1, dans lequel le procédé présente de plus l'étape
le transport de la pièce à usiner, de laquelle la pièce partielle a été séparée, avec la pièce partielle séparée vers le dispositif d'usinage (5) avec le premier dispositif de transport (6).

6. Dispositif (1) pour la séparation d'une pièce à usiner en particulier en forme de plaque qui se compose de préférence au moins par section de bois, de matériaux dérivés du bois, de matière plastique, de gypse, de fibres de ciment ou similaire, dans lequel le dispositif (1) est approprié pour la réalisation du procédé selon l'une quelconque des revendications 1 à 5 et présente :
un appui de pièce à usiner (3) pour la réception d'une pièce à usiner (2),
un dispositif d'appui (4) qui s'étend au moins par section sur l'appui de pièce à usiner (3),
un dispositif d'usinage (5) pour l'usinage d'une pièce à usiner (2), dans lequel l'usinage est effectué au moins par section le long d'une épaisseur de pièce à usiner entière, lequel dispositif d'usinage est monté de manière mobile sur le dispositif d'appui (4) sur l'appui de pièce à usiner (3) et de préférence dans son sens d'étendue verticale (h),
un premier dispositif de transport (6) pour le transport d'une pièce à usiner (2) vers et loin du dispositif d'usinage (5),
un second dispositif de transport (7) pour le transport d'une pièce loin du dispositif d'usinage (5),
pour lequel le dispositif d'usinage (5) est agencé dans le sens de transport de la pièce à usiner vers le dispositif d'usinage (5) avant le second dispositif de transport (7) et le premier et le second dispositif de transport (6, 7) se chevauchent au moins par section,
un dispositif de pression (17) pour la pression de la pièce à usiner contre l'appui de pièce à usiner (3), dans lequel le dispositif de pression (17) est monté sur le dispositif d'appui (4) dans le sens de transport de la pièce à usiner vers le dispositif d'usinage derrière le dispositif d'usinage (5),
**caractérisé en ce que**
à l'extrémité inférieure du dispositif de pression (17) plusieurs rouleaux de pression (20) sont montés dans un plan parallèlement au côté supérieur de l'appui de pièce (3).

7. Dispositif selon la revendication 6, pour lequel le dispositif d'usinage (5) ne peut pas être déplacé dans le sens de transport des premier et second dispositifs de transport (6, 7).

8. Dispositif (1) selon l'une quelconque des revendications 6 et 7, pour lequel le second dispositif de transport (7) est intégré dans l'appui de pièce à usiner (3), de préférence sous la forme d'au moins un rouleau entraînable ou d'une bande de transport entraînable.

9. Dispositif (1) selon l'une quelconque des revendications 6 à 8, pour lequel le premier dispositif de transport (6) est configuré sous la forme d'un dispositif de préhension pour la préhension de la pièce à usiner (2), dans lequel le dispositif de préhension est configuré de préférence à partir de plusieurs pinces de préhension (6.2) qui sont mobiles de manière particulièrement préférée les unes par rapport aux autres.

10. Dispositif (1) selon l'une quelconque des revendications 6 à 9, pour lequel le dispositif de pression (17) est configuré afin de presser la pièce à avec une force régulée.

11. Dispositif (1) selon la revendication 10, pour lequel le dispositif de pression (17) est configuré sous la forme d'au moins un rouleau qui est entraînable.

12. Dispositif (1) selon la revendication 11, pour lequel le rouleau du dispositif de pression (17) est précontraint avec un élément de ressort (30, 31, 32) dans son sens de gravité.
